# EUROPEAN PATENT APPLICATION

(11) **EP 4 063 473 A1**
(43) Date of publication of application: **28.09.2022**
(21) Application number: 20888863.6
(22) Date of filing: 18.11.2020
(51) Int. Cl.: C11B 9/02, C11B 1/10, B01D 11/02

(54) **METHOD FOR EXTRACTING ACTIVE COMPONENTS FROM PLANTS AND DEVICES FOR SUCH PURPOSE**

(30) Priority: 21.11.2019 CO 19013031
(71) Applicant: Diaz Merchan, Cristian Camilo, Bogotá 111321 (CO); Saboya Ruiz, Andriana Patricia, Bogotá 111312 (CO)
(72) Inventor: Diaz Merchan, Cristian Camilo, Bogotá 111321 (CO); Saboya Ruiz, Andriana Patricia, Bogotá 111312 (CO)
(74) Representative: Trupiano, Federica
(86) International application number: PCT/IB2020/060877
(87) International publication number: WO 2021/099970

(57) **Abstract**

The present invention relates to a method and apparatus for extracting active components from a plant material by means of • Introducing the material containing the active components in an extraction chamber • Introducing a hydrofluorocarbonated compound in a tank at a pressure between 482.6 kPa and 1,447.9 kPa (70 psi to 210 psi) • Introducing ethanol in a receptacle • Mixing the hydrofluorocarbonated compound with ethanol • Allowing the mixture to reach the plant material • Allowing the mixture enriched with ethanol and the hydrofluorocarbated compound to flow out of the extraction chamber and into a tank • Allowing the ethanol to evaporate and become separated from the residual mixture slower than the hydrofluorocarbonated compound • Optionally, the hydrofluorocarbonated compound is recovered by condensing and returning it to the pressurised tank • Optionally, the ethanol is recovered by condensing and returning it to the mixing receptacle.

## Description

### Technological Sector

The present patent application relates to a process for extracting active components from plant material and to the apparatus enabling said extraction. More particularly, the present invention relates to a method for extracting cannabinoids and devices which allow such extraction.

### Prior art

The process of extracting substances with pharmacological activity from plant biomass is a common practice involving long processing hours and multiple extraction and purification steps with solvents which are often contaminants. This means that the efficiency achieved is not high, there is an environmental concern, and it is necessary to explore more efficient and less impact alternatives to the environment. Additionally, the compounds of pharmacological interest are normally present in the mixed plant in complex matrices with other substances that are undesirable, requiring selective extraction methodologies.

The extraction methods currently being used in the pharmaceutical industry involve the use of solvents in the liquid state. In many cases, liquefied gases, e.g., CO2 or butane, are employed at supercritical or subcritical pressure and pressure to act as liquid solvents and which can extract the substances of interest. The equipment required must withstand very high pressures, are very expensive and, in many cases, involve great danger since they are flammable, explosive gases-e.g., butane--.

Extraction systems are also employed by means of super cooling air at about - 50°C. This allows solvents -- such as ethanol-- to modify its properties and a selective extraction is achieved. The downside of this methodology is the use of large amounts of the solvent, which must then be removed by forcing the use of additional evaporation equipment.

In turn, in the emerging market of the cannabis industry for either medicinal, scientific or adult market purposes, extraction technologies have been developed and adapted, allowing separation of the active ingredients from the cannabis sativa Plant. The state of the art teaches cannabinoids extraction processes employing organic solvents such as naphtha, petroleum ether, butane, propane, benzene, isopropyl alcohol or xylenes. However, this type of compounds are toxic and their use has been discouraged. Ethanol has been the most widely used solvent, either by industrial extraction mechanism or by means of plant infusions, alcoholic beverages or alcohol for topical use.

Despite its broad use, ethanol (being a polar protic solvent) also dissolves some pigments and waxes, which gives an unattractive appearance to extracts, dark and viscous, and generates drawbacks from the pharmaceutical standpoint. One evolution of the method is the work at temperatures between 50 and 20 degrees Celsius below zero. Ethanol as solvent is affected by temperature, and under these conditions, it does not dissolve waxes or most of the pigments in the plant, thereby generating a lighter, cleaner extract. A disadvantage of ethanol extraction - even at low temperatures - is the need to use low pressure distillation equipment or rotary evaporators in order to eliminate excess ethanol and leave in free phase the compounds of interest.

Other extraction methodologies-e.g., supercritical CO2 extraction, which involve more advanced technology and infrastructure - have also been developed. The CO2 at supercritical temperature and pressure (i.e., at pressure and temperature at which the CO2 is a hybrid between gas and liquid) behaves like a very good solvent and, because of its polarity, can dissolve substances of interest as cannabinoids leaving behind most plant pigments. For this type of extraction, it is a requirement the use of high gauge steel in the equipment to withstand the working pressure, making the method quite costly.

In butane extraction, the liquid phase pressurized butane is used as a solvent for simple diffusion extraction. The extraction principle follows the same logic of supercritical extraction with CO2, i.e., a solvent is chosen that is allowed to pass to the liquid phase so that, after extraction and depressurization, it evaporates easily and leaves a complex mixture containing the substances of interest. The advantage of butane extraction is its low cost -- compared to supercritical CO2 extraction - and the fact that it does not require high-pressure equipment. The disadvantages of this type of extraction are the inherent danger of butane -- is a flammable gas and can become explosive in closed environments-- and the olfactory marker (a mercaptan) of commercial butane, an unpleasant smell which impregnates the oleoresin obtained.

In the state of the art, research has also been found associated with new solvents for extraction as, for example, hydrofluorocarbons. Background instruments such as US2009305876, US2017113161, CN 1356920, WO2008071985, WO8900187, among others, suggest their use, but involve a series of complex steps, the use of more equipment for many more steps-- e.g., heating, stirring, solvent recovery, etc. the use of more cosolvents, and in general no further benefits are taught in connection with the existing methods.

Therefore, there is a need for methods and apparatuses that allow more efficient extraction of active components of plant material, particularly for the extraction of cannabinoids.

### Detailed description of the invention

The present invention provides an improved method of extraction that better preserves the terpenes and other compounds of pharmacological or industrial interest present in the plant material, which is the part of the plant used for this purpose. In addition, it has an optimized extraction device which makes a mixture of solvents in situ, allowing the selective extraction of selected compounds, leaving in the biomass remaining most of the pigments and vegetable waxes.

More particularly, the invention shows a high efficiency extraction system based on hydrofluorocarbons as solvents, and more particularly the use of 1,1,1,2-tetrafluoroethane and dichlorodifluoromethane, nonflammable, non-explosive, and very low toxicity substances which makes it superior to conventional and industrial extraction systems regarding safety in their use.

More particularly, the invention teaches an extraction apparatus having an internal co eluent (ethanol) preparation device using the Joule Thompson Effect to freeze the ethanol and the system, avoiding the involuntary drag of pigments and most of the waxes from the plant biomass.

The method of the present invention relates to a method of extracting active components from a plant material including the following steps:
- Adding the plant material containing the active components into an extraction chamber (10; 100)
- Adding a hydrofluorocarbon compound (HFC) with dielectric constant between 7 and 10 to a tank (20; 200) having a pressure between 482.6 kPa and 1447.9 kPa (70 psi and 210 psi)
- Adding ethanol to a vessel (30)
- Mixing the hydrofluorocarbon compound (HFC) with ethanol in proportions between 90% -99% for HFC and 1% -10% for ethanol at pressures equal to or below 896.3 kPa (130 psi). This mixture in some cases can be made directly in the ethanol containing vessel (30) and which in turn is within the extraction chamber (10) or by industrial devices (350) that can make the mixture before entering the extraction chamber (100)
- Allowing the mixture of the hydrofluorocarbon compound (HFC) and ethanol to reach the plant material found in the extraction chamber (10; 100)
- Allowing the enriched mixture of ethanol with the compound of interest and the hydrofluorocarbon solvent to exit the extraction chamber (10;100) to a tank at ambient pressure conditions (50; 500), so that the hydrofluorocarbon compound evaporates immediately away from the mixture. Through the outlet valve, the liquid enriched with the oils of the vegetable material exits at a temperature close to the 30 degrees Celsius below zero and begins its spontaneous evaporation process at ambient temperature.
- Allowing the ethanol to evaporate and remove from the residual mixture in a slower manner than the hydrofluorocarbon compound at ambient conditions or by means of a hot air stream, rendering the oil with the active components of the plant material.
- Optionally, the hydrofluorocarbon compound is recovered by condensing it and returning it to the pressurized tank by means of a pump (600) and optionally a recovery tank (700).
- Optionally, the ethanol is recovered by condensing it and returning it to the mixing vessel.

It should be noted that the plant material can be dry and ground. This greatly facilitates the extraction process.

The extraction methodology of the present invention is based on the use of compounds of the hydrofluorocarbon (HFC) family, which are the evolution of chlorofluorocarbons (CFCs), most of them prohibited in many countries for exhausting the ozone layer. In such a sense, the HFCs of the present invention are widely used and considered as non-ozone depleting substances. The choice of HFC as an alternative extraction medium is considered for the following aspects:
- the specific solubility of the bioactive compounds as the vegetable oils in the HFC. The solubility studies of a substance in a particular medium consider three basic aspects, namely: (i) chemical aspects (e.g., neutralization reactions); (ii) structural aspects (e.g., the presence of related groups); (iii) electrical aspects (e.g., dipole moment, dielectric constant). In order for a solute (bioactive substance as cannabis oil) to dissolve in a given solvent (HFC), it is necessary that the solvent dispels the solute molecules and facilitate its solvation; this depends on the dielectric constant of the solvent and the polarity of both the solute and the solvent. For the present case, it was found that it was necessary to use a substance that will increase the dielectric constant of the extraction mixture. The HFCs chosen have a dielectric constant between 7 and 10.
- HFCs are chosen because their boiling temperature is under zero, causing it to be easily evaporated at ambient pressure and temperature without the need to apply a heat source, thereby eliminating almost all the external energy sources.
- it is an environmental-friendly alternative.
- it is a safe alternative. The operating conditions are given at low pressures -- compared to the extraction with supercritical CO2--, a non-explosive solvent is used -- unlike the extraction with butane--, the toxicity of the HFC employed is very low and the manufacture of its equipment is more economical, compared to other technologies.

Hydrofluorocarbons (HFCs) that can be employed either alone or in admixture are:
- 1,1,1,2, Tetrafluoroethane
- Pentafluoroethane
- 1,1,1, Trifluoroethane
- Difluoroethane
- Butane
- Pentane

For the purpose of the present embodiment, 1,1,1,2, tetrafluoroethane, dichlorodifluoromethane or mixtures thereof are preferred.

It is apparent that this method has enormous advantages in connection with the state-of-the-art processes. It should be appreciated that the present methodology can be employed for extraction of any type of component in any plant variety. However, the inventors have preferred to work with Cannabis sativa, Coffea arabica and Annona muricata. The present invention is illustrated in the following table in two embodiments: the first embodiment is designed as a portable process and the second one is performed at industrial level by the same inventors. The assays were performed with plant material from Cannabis sativa L.

| Aspect to assess | Method used | | | | |
|---|---|---|---|---|---|
| | Supercritical CO2 extraction | Supercritical Butane extraction | Supercooled ethanol extraction | Portable invention | Industrial-level invention |
| Additional structural requirements | Yes, high-pressure applications materials | No | Yes, ultra-refrigeration equipment | No | Gas recovery equipment |
| Explosion risk | Yes, very high working pressure | Yes, explosive gas | Yes, combustible extraction liquid at ambient temperature | No, low working pressure and non-combustible solvent | No, low working pressure and non-combustible solvent |
| Need for separating waxes (winterization) | Yes | Yes | No | No | No |
| Need for rotary evaporation | Yes | Yes | Yes | No | No or very low |
| Oleoresin extraction | Yes | Yes | No | No | No |
| Direct oil extraction | No | No | No | Yes, with small amounts of co-eluents | Yes, with small amounts of co-eluents |
| Cost | | | | | |
| Average oleoresin yield | 9%-11% | 10%-11% | 10%-14% | NA | NA |
| Average oil yield | 4.5%-5.5% | 5.0%-5.5% | 5.0%-7.0% | 4.8%-7.0% | 4.8%-7.0% |
| Terpene extraction | Weak | Weak | Weak | Efficient | Efficient |
| Portability | No | No | No | Yes | No |
| Solvent toxicity | No | Yes | Low | Very low | Very low |

Regarding the apparatus of the invention, it consists of the following parts:
- A pressurized tank (20; 200) for the storage of hydrofluorocarbon compounds
- A container for the storage of ethanol (30)
- An extraction chamber (10; 100) for depositing the plant material to be treated
- A device (350) and/or container (30) for mixing ethanol with the hydrofluorocarbon compound
- Pipes connecting the tank for storage of hydrofluorocarbon compounds (20; 200), the ethanol storage vessel (30), the device (350) and/or container (30) for mixing ethanol with the hydrofluorocarbon compound and the extraction chamber (10; 100) to deposit the plant material
- Exhaust pipe of the extractor
- Receiving container (50; 500) of the enriched mixture of hydrofluorocarbons, ethanol and plant extract
- Control valves located in intermediate portions of the pipes to control the flow of the fluids

An embodiment may involve the non-recovery of the hydrofluorocarbon. The other embodiment may involve such recovery. In such a case, the apparatus also comprises the following parts:
- A pipe at the top of the receiving container (500) of the enriched mixture for removing the vapors from the hydrofluorocarbon compound
- A recovery pump (600) of hydrofluorocarbon vapors connected to the pipe coming from the receiving container
- A pipe which carries the hydrofluorocarbon recovered from the pump to a recovery tank (700)
- A recovery tank (700) for hydrofluorocarbon compounds

In such a case, the hydrofluorocarbon can be reused, as well as the ethanol.

### Description of Figures

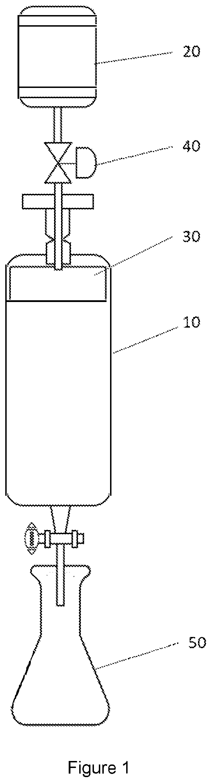

FIG. 1 illustrates an apparatus according to an embodiment of the present invention without recovery of hydrofluorocarbons.

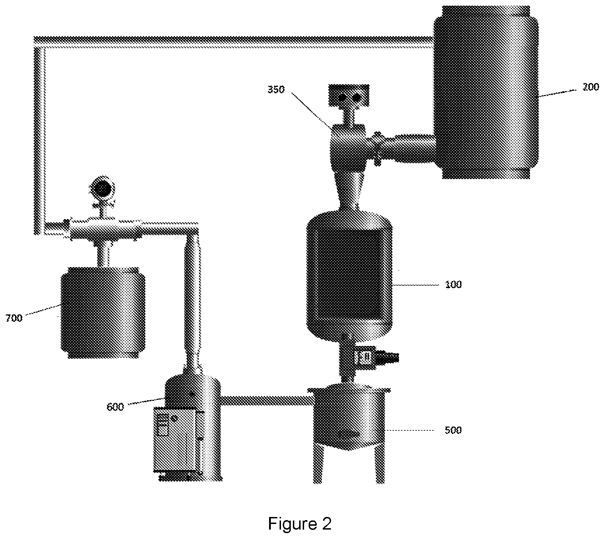

FIG. 2 illustrates an apparatus according to an embodiment of the present invention with recovery of hydrofluorocarbons.

### Embodiments of the Invention

The same variety of cannabis sativa L was harvested, dried and milled for extraction with the proposed extraction methodology using equipment designed by the inventors. The starting weight of plant material for each test was 50g, the amount of HFC solvent, specifically 1,1,2,2-trefluoroethane, was 340g, and the extraction time was 40 minutes in all cases. The extraction procedure was the same, with the introduction of just one variable in the system, which is the amount of co-eluent added, in this case the co-eluent was 96% ethanol.

The milled plant material is introduced into the device leaving a headspace for the placement of a glass container with a varying amount of eluent, in all cases the system tightness test was made to decrease uncertainty.

Once the system is closed, the HFC is slowly released, which upon decompresses promotes a phenomenon that absorbs energy from its environment, causing it to lower the temperature of the co-eluent placed at the headspace and slowly mixing to overflow to finally flood the extraction chamber. The residence time of the plant material with the extraction mixture is 40 minutes counted with a timer. After this time, it proceeds to depressurization of the system by opening the output key located on the bottom of the device and allowing the output of the complex mixture enriched with the compounds of interest.

Once the extraction mixture is evaporated, at ambient pressure and temperature, the resulting mixture is a saturated oil solution with a few grams of ethanol, which can be evaporated leaving the container open or with the aid of a hot air gun.

The obtained oil was weighed to determine the yield by weight and then analyzed by high efficiency liquid chromatography for the quantitative determination of the cannabinoids THC, THCA, CBD, CBA, and CBG.

Eight experiments were selected within the test where the HFC/co-eluent ratio changed as shown in the tables below.

The first table shows the weight yield, i.e., the amount of oil that is extracted as a function of the amount of co-eluent added.

| | Plant material (g) | Co-eluent (g) | Weight of container (g) | Weight of container + extract (g) | Weight extract (g) | Yield (%) |
|---|---|---|---|---|---|---|
| E1 | 50.95 | 0 | 141.18 | 141.89 | 0.71 | 1.32% |
| E2 | 50.54 | 2 | 51.63 | 52.25 | 0.62 | 1.23% |
| E3 | 50.64 | 5 | 52.49 | 53.45 | 0.96 | 1.90% |
| E4 | 50.5 | 8 | 51.78 | 54 | 2.22 | 4.40% |
| E5 | 50.24 | 10 | 51.74 | 54.16 | 2.42 | 4.82% |
| E6 | 50.29 | 12 | 51.72 | 53.89 | 2.17 | 4.31% |
| E7 | 50.02 | 15 | 51.84 | 55.16 | 3.32 | 6.64% |
| E8 | 50.04 | 20 | 51.9 | 55.8 | 3.9 | 7.79% |

In the table below, the yield of the extraction in composition of cannabinoids is shown

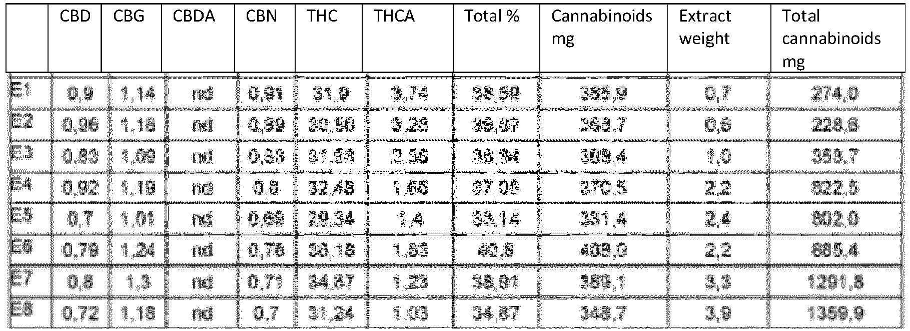

## Claims

1. Method for extracting active components from a plant material comprising the following steps:
a. Adding the plant material containing the active components into an extraction chamber
b. Adding a hydrofluorocarbon compound (HFC) with dielectric constant between 7 and 10 to a tank having a pressure between 482.6 kPa and 1447.9 kPa (70 psi and 210 psi)
c. Adding ethanol to a vessel.
d. Mixing the hydrofluorocarbon compound (HFC) with ethanol in proportions between 90% -99% for HFC and 1% -10% for ethanol at pressures equal to or below 896.3 kPa (130 psi).
e. Allowing the mixture of the hydrofluorocarbon compound (HFC) and ethanol to reach the plant material found in the extraction chamber.
f. Allowing the enriched mixture of ethanol with the compound of interest and the hydrofluorocarbon solvent to exit the extraction chamber (10;100) to a tank at ambient pressure conditions, so that the hydrofluorocarbon compound evaporates immediately away from the mixture.
g. Allowing the ethanol to evaporate and remove from the residual mixture in a slower manner than the hydrofluorocarbon compound at ambient conditions or by means of a hot air stream, rendering the oil with the active components of the plant material.
h. Optionally, the hydrofluorocarbon compound is recovered by condensing it and returning it to the pressurized tank by means of a pump and optionally a recovery tank.
i. Optionally, the ethanol is recovered by condensing it and returning it to the mixing vessel.

2. The method of extraction according to claim 1, wherein the plant material has been previously dried.

3. The method of extraction according to claim 1, wherein the plant material has been previously ground up to 100 microns.

4. The method of extraction according to claim 1 wherein the hydrofluorocarbon compound is selected from 1,1,1,2-tetrafluoroethane, pentafluoroethane, 1,1,1-trifluoroethane, dichlorodifluoromethane, dichlorodifluoromethane, or mixtures thereof.

5. The method of extraction according to claim 1, wherein the plant material is chosen from Cannabis Sativa, Coffea Arabica and Annona muricata.

6. An apparatus for the extraction of active components from a plant consisting of the following parts:
a. A pressurized tank (20; 200) for the storage of hydrofluorocarbon compounds.
b. A container for the storage of ethanol (30).
c. An extraction chamber (10; 100) for depositing the plant material to be treated.
d. A device (350) and/or container (30) for mixing ethanol with the hydrofluorocarbon compound.
e. Pipes connecting the tank for storage of hydrofluorocarbon compounds (20; 200), the ethanol storage vessel (30), the device (350) and/or container (30) for mixing ethanol with the hydrofluorocarbon compound and the extraction chamber (10; 100) to deposit the plant material.
f. Exhaust pipe of the extractor.
g. Receiving container (50; 500) of the enriched mixture of hydrofluorocarbons, ethanol and plant extract.
h. Control valves located in intermediate portions of the pipes to control the flow of the fluids.
i. Optionally, devices for the recovery of hydrofluorocarbon compounds comprising:
i. A pipe at the top of the receiving container (500) of the enriched mixture for removing the vapors from the hydrofluorocarbon compound
ii. A recovery pump (600) of hydrofluorocarbon vapors connected to the pipe coming from the receiving container
iii. A pipe which carries the hydrofluorocarbon recovered from the pump to a recovery tank (700)
iv. A recovery tank (700) for hydrofluorocarbon compounds

7. An apparatus for extracting active components from a plant according to claim 6, wherein the apparatus does not recover hydrofluorocarbons.

8. An apparatus for extracting active components from a plant according to claim 6, wherein the apparatus recovers hydrofluorocarbons.
